# FASCICULE DE BREVET EUROPEEN

(11) **EP 3 380 942 B1**
(45) Date de publication et mention de la délivrance du brevet: **15.02.2023**
(21) Numéro de dépôt: 16812908.8
(22) Date de dépôt: 24.11.2016
(51) Int. Cl.: G06F 11/34, G06F 11/30

(54) **PROCÉDÉ ET SYSTÈME D'AIDE À LA MAINTENANCE ET À L'OPTIMISATION D'UN SUPERCALCULATEUR**
VERFAHREN UND SYSTEM ZUR UNTERSTÜTZUNG DER WARTUNG UND OPTIMIERUNG EINES SUPERCOMPUTERS
METHOD AND SYSTEM FOR AIDING MAINTENANCE AND OPTIMIZATION OF A SUPERCOMPUTER

(30) Priorité: 27.11.2015 FR 1561465
(43) Date de publication de la demande: 03.10.2018
(73) Titulaire: BULL SAS, 78340 Les Clayes Sous Bois (FR)
(72) Inventeur: PELLETIER, Benoit, 38960 Saint Etienne de Crossey (FR); BELLINO, Jullian, 13680 Les Baisses (FR)
(74) Mandataire: Cabinet Camus Lebkiri
(86) Numéro de dépôt international: PCT/EP2016/078714
(87) Numéro de publication internationale: WO 2017/089485

(56) Documents cités:
- WO-A1-2012/082120
- US-A1- 2001 013 008
- US-A1- 2004 133 395
- US-A1- 2012 019 351
- US-A1- 2014 358 833
- US-A1- 2015 269 050
- CASOLARI S ET AL: "Short-term prediction models for server management in Internet-based contexts", DECISION SUPPORT SYSTEMS, ELSEVIER SCIENCE PUBLISHERS, AMSTERDAM, NL, vol. 48, no. 1, 1 décembre 2009 (2009-12-01), pages 212-223, XP026737959, ISSN: 0167-9236, DOI: 10.1016/J.DSS.2009.07.014 [extrait le 2009-08-09]
- PHILIPPE ESLING ET AL: "Time-series data mining", ACM COMPUTING SURVEYS, ACM, NEW YORK, NY, US, US, vol. 45, no. 1, 7 décembre 2012 (2012-12-07), pages 1-34, XP058009905, ISSN: 0360-0300, DOI: 10.1145/2379776.2379788

## Description

### DOMAINE TECHNIQUE DE L'INVENTION

La présente invention concerne le domaine des supercalculateurs. La présente invention propose plus particulièrement un procédé et un système d'aide à la maintenance et à l'optimisation d'un supercalculateur pour détecter des anomalies en temps réel pour optimiser le fonctionnement du supercalculateur.

### ARRIÈRE-PLAN TECHNOLOGIQUE DE L'INVENTION

Afin de résoudre des problématiques complexes, les entreprises font souvent appel à des supercalculateurs. Elles recherchent en effet la possibilité d'effectuer des calculs de manière performante afin de répondre à leur besoin. Pour cela, une infrastructure importante est nécessaire. Afin de fournir la puissance de calcul souhaitée, le supercalculateur comprend parfois plusieurs milliers de machines. Par exemple, le supercalculateur TERA100 dispose de plus de 3000 noeuds de calcul. De plus, toutes ces machines sont interconnectées, ce qui rend l'infrastructure encore plus complexe. Ces liaisons sont d'autant plus importantes qu'il s'agit d'un réseau très haut débit spécifiquement utilisé dans les calculs haute performance (autrement appelé *High-Performance Computing* ou HPC en anglais).

Outre le fait que ces supercalculateurs traitent des problématiques complexes, il s'agit souvent de tâches critiques. C'est pourquoi en plus de prendre en compte la performance du supercalculateur, il est également important d'améliorer la fiabilité de celui-ci. En effet, aujourd'hui, nous pouvons dire qu'une erreur critique apparaît à travers ce type d'infrastructures toutes les demi-heures. En plus de ces potentielles pannes, le routage qui est le chemin par lequel les paquets réseaux sont envoyés d'une machine à l'autre doit être constamment mis à jour. En effet selon les applications lancées à travers le supercalculateur des phénomènes de congestion peuvent apparaître.

De par cette complexité que nous avons décrite, l'analyse humaine est inenvisageable ou du moins très limitée. En effet le temps de réactivité suite à une erreur est souvent trop long dans ce type de systèmes critiques, cela entraîne donc une interruption de services. L'idée est donc de fournir un outil d'aide à la maintenance en temps réel du réseau afin d'améliorer cette réactivité et ainsi limiter au maximum les interruptions de services. Le but est d'améliorer la fiabilité du supercalculateur. Améliorer la fiabilité du supercalculateur, c'est également optimiser son utilisation et ainsi les performances des calculs effectués.

Il est enseigné dans le document US 2014/0358833 A1, une méthode pour la maintenance d'un environnement de traitement et plus précisément un procédé de prédiction pour prédire un état anormal dudit environnement à un moment futur, ledit procédé consistant à obtenir une ou plusieurs valeurs d'un ou plusieurs des paramètres du système de traitement, à déterminer, pour l'une ou plusieurs mesures, une ou plusieurs valeurs prédites pour un ou plusieurs points dans le temps dans le futur, à déterminer, sur la base des valeurs prédites, une ou plusieurs valeurs de changement pour un ou plusieurs points dans le temps, et sur la base d'une ou plusieurs valeurs de changement, à déterminer si un état anormal existe dans le système de traitement.

Néanmoins la large quantité de paramètres ou de données à traiter, peut alourdir le processus de détection d'anomalies. En outre, le procédé enseigné dans US 2014/0358833 A1 prend en compte, certains paramètres arbitraires pouvant conduire à de fausses prédictions ou détections d'anomalies.

### DESCRIPTION GÉNÉRALE DE L'INVENTION

La présente invention a donc pour objet de pallier un ou plusieurs des inconvénients de l'art antérieur en proposant un procédé et un système d'aide à la maintenance et à l'optimisation d'un supercalculateur. Ce procédé et ce système permettent d'améliorer la fiabilité du supercalculateur. Améliorer la fiabilité du supercalculateur, c'est également optimiser son utilisation et ainsi les performances des calculs effectués.

À cet effet, l'invention concerne un procédé d'aide à la maintenance et à l'optimisation d'un supercalculateur, comprenant une:
- étape d'envoi, par au moins un capteur, d'un signal représentatif de données statistiques d'au moins un noeud de calcul du supercalculateur à un système d'aide à la maintenance;
- étape de prédiction à intervalles réguliers, par un algorithme de prédiction géré par un processeur du système d'aide à la maintenance, des variations futures des données statistiques à partir des signaux représentatifs des données statistiques envoyés par le ou les capteurs et stockés dans des moyens de stockage du système d'aide à la maintenance;
- étape de détection en temps réel, par un algorithme de détection géré par le processeur, d'anomalies de variations des signaux représentatifs des données statistiques envoyés par le ou les capteurs par rapport aux variations futures prédites dans l'étape de prédiction;
les étapes de prédiction de variations futures et de détection d'anomalies comprenant au moins un premier et un second filtrage desdits signaux représentatifs des données statistiques en fonction du ou desdits capteur(s) ayant envoyé lesdits signaux nécessaires à la mise en oeuvre de la maintenance et l'optimisation dudit supercalculateur, le procédé comprenant une étape de sélection pour chaque capteur, par une interface de l'infrastructure informatique, d'un type de signal nécessaire à la prédiction et/ou la détection d'anomalies, et de sélection, dans l'ensemble des capteurs, d'un certain nombre de capteurs qui seront utilisés pour le filtrage desdites données ou desdits signaux nécessaires à la prédiction et/ou la détection des anomalies.

Selon une autre particularité, l'étape de prédiction comprend les étapes suivantes :
- mémorisation dans les moyens de stockage des données statistiques envoyés par le ou les capteurs sous forme de signaux représentatifs de ces données statistiques ;
- construction, par un algorithme de modélisation géré par le processeur, d'un modèle mathématique prédictif à partir des données statistiques, le modèle étant mémorisé dans les moyens de stockage ;
- calcul, par un algorithme de calcul géré par le processeur, des variations futures des données statistiques à partir du modèle mathématique prédictif ainsi que des intervalles de confiance délimitant les variations futures des données statistiques ;
- mémorisation dans les moyens de stockage des variations futures et des intervalles de confiance.

Selon une autre particularité, la construction du modèle mathématique prédictif est calculée par l'algorithme de modélisation géré par le processeur à partir des données statistiques provenant des signaux représentatifs de ces données statistiques envoyés par le ou les capteurs depuis les dernières deux heures.

Selon une autre particularité, l'étape de prédiction est mise en oeuvre à intervalles réguliers de soixante minutes.

Selon une autre particularité, l'étape de détection comprend les étapes suivantes :
- comparaison, par l'algorithme de détection géré par le processeur, des signaux représentatifs des données statistiques avec les variations futures et des intervalles de confiance mémorisés en dernier dans les moyens de stockage ;
- mémorisation, dans les moyens de stockage, dans un tableau d'anomalies des anomalies détectées par l'algorithme de détection, une anomalie étant détectée lorsque les signaux représentatifs des données statistiques sortent des intervalles de confiance et/ou s'éloignent des variations futures.

Selon une autre particularité, l'étape de prédiction comprend, en outre, une première étape d'agrégation, pendant un intervalle de temps déterminé, par un algorithme d'agrégation géré par le processeur, des données statistiques mémorisées dans les moyens de stockage, l'étape de détection comprenant en outre une deuxième étape d'agrégation par le processeur, pendant le même intervalle de temps, des signaux, représentatifs des données statistiques, envoyés en temps réel par le ou les capteurs.

Selon une autre particularité, le premier filtrage, par un algorithme de filtrage géré par ledit processeur, des données statistiques en fonction dudit ou desdits capteur(s) ayant envoyé lesdits signaux représentatifs de ces données statistiques au cours de l'étape de prédiction, précède l'étape de construction, le second filtrage dans l'étape de détection , par l'algorithme de filtrage géré par le processeur, des signaux représentatifs des données statistiques en provenance dudit ou desdits capteurs ayant envoyé ces signaux représentatifs, précède l'étape de comparaison. Selon une autre particularité, l'étape de prédiction comprend une première étape d'affichage dans laquelle le processeur du système d'aide à la maintenance envoie des signaux représentatifs des valeurs des variations futures ainsi que les intervalles de confiance vers des moyens d'affichage pour être affichés par les moyens d'affichage.

Selon une autre particularité, l'étape de détection comprend une deuxième étape d'affichage dans laquelle le processeur du système d'aide à la maintenance envoie aux moyens d'affichage un signal représentatif d'une anomalie détectée par l'algorithme de détection lorsque qu'une anomalie a été détectée par l'algorithme de détection.

Selon une autre particularité, l'étape de prédiction est réalisée en outre à partir d'informations concernant le supercalculateur, les données, mémorisées dans une zone de stockage dudit supercalculateur et contenant lesdites informations, étant envoyées au système d'aide à la maintenance.

L'invention concerne également un système d'aide à la maintenance et à l'optimisation d'un supercalculateur comprenant une infrastructure informatique comportant au moins un processeur et des moyens de stockage des signaux représentatifs de données statistiques envoyés par au moins un capteur situé à au moins un noeud de calcul dudit supercalculateur, lesdits moyens de stockage contenant, également, au moins:
- un algorithme de prédiction dont l'exécution sur ledit processeur permet de prédire, à intervalles réguliers, des variations futures des données statistiques à partir des signaux représentatifs de données statistiques en provenance desdits capteurs,
- un algorithme de détection dont l'exécution sur ledit processeur, permet de détecter, en temps réel, des anomalies de variations des signaux représentatifs des données statistiques en provenance desdits capteurs par rapport aux variations prédites par l'algorithme de prédiction,
ledit système comprenant également au moins un algorithme dont l'exécution sur le processeur permet de filtrer lesdits signaux représentatifs des données statistiques en fonction dudit ou desdits capteur(s) ayant envoyé lesdits signaux représentatifs de ces données statistiques nécessaires à la mise en oeuvre du procédé de maintenance et d'optimisation, l'infrastructure (2) informatique comprenant une interface qui permet de sélectionner pour chaque capteur (C1, C2, Cn), le type de signal nécessaire à la prédiction et/ou la détection d'anomalies et de sélectionner dans l'ensemble des capteurs (C1 , C2, Cn), un certain nombre de capteurs (C1, C2, Cn) qui sont utilisés pour le filtrage desdites données ou desdits signaux nécessaires à la prédiction et/ou la détection anomalies.

Selon une autre particularité, l'infrastructure informatique comprend en outre :
- un algorithme de modélisation stocké dans les moyens de stockage apte à construire un modèle mathématique prédictif à partir des données statistique mémorisées dans les moyens de stockage,
- un algorithme de calcul stocké dans les moyens de stockage apte à calculer des variations futures des données statistiques à partir du modèle mathématique prédictif ainsi que des intervalles de confiance délimitant les variations futures des données statistiques.

Selon une autre particularité, l'algorithme de détection est apte à comparer des signaux représentatifs des données statistiques avec les variations futures et des intervalles de confiance mémorisés en dernier dans les moyens de stockage.

Selon une autre particularité, l'infrastructure informatique comprend au moins un algorithme d'agrégation stocké dans les moyens de stockage apte à agréger chaque minute des données statistiques mémorisées dans les moyens de stockages et à agréger chaque minute des signaux, représentatifs des données statistiques, envoyés en temps réel par le ou les capteurs.

Selon une autre particularité, l'infrastructure informatique comprend en outre un algorithme de filtrage stocké dans les moyens de stockage apte à filtrer les données statistiques stockées les moyen de stockage et les signaux, représentatifs des données statistiques, en fonction du ou des capteurs ayant envoyés les signaux représentatifs de ces données statistiques. Selon une autre particularité, le système comprend en outre des moyens d'affichage aptes à afficher au moins les valeurs des variations futures ainsi que les intervalles de confiance.

### DESCRIPTION DES FIGURES ILLUSTRATIVES

D'autres particularités et avantages de la présente invention apparaîtront plus clairement à la lecture de la description ci-après, faite en référence aux dessins annexés :

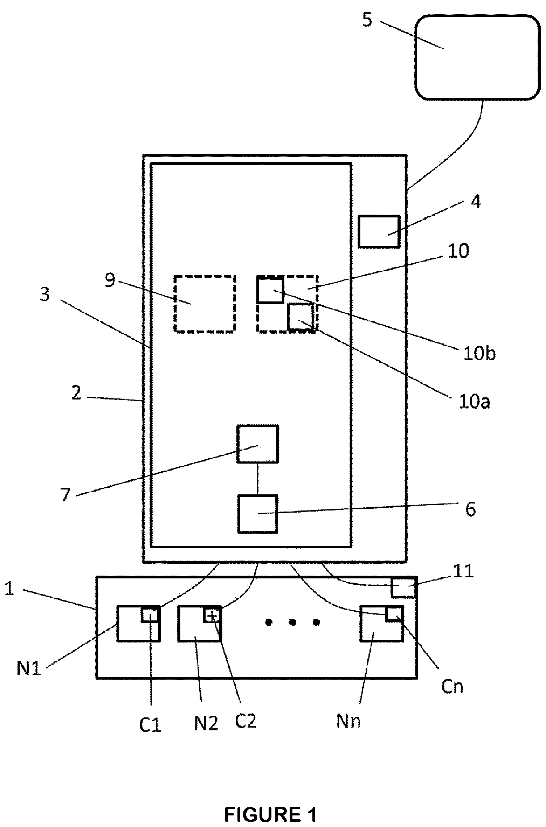

- La figure 1 représente schématiquement le système d'aide à la maintenance et à l'optimisation selon un mode de réalisation pour un supercalculateur ;

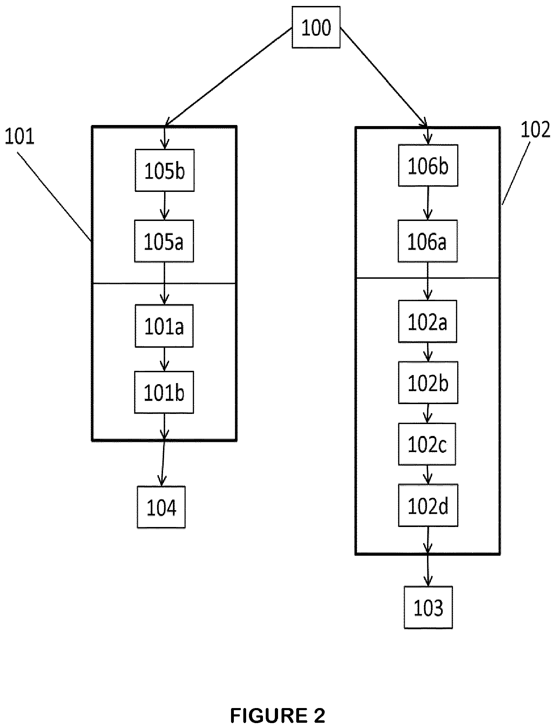

- la figure 2 représente un logigramme selon un mode de réalisation du procédé ;
- la figure 3 représente schématiquement un exemple d'architecture du système d'aide à la maintenance et à l'optimisation ;

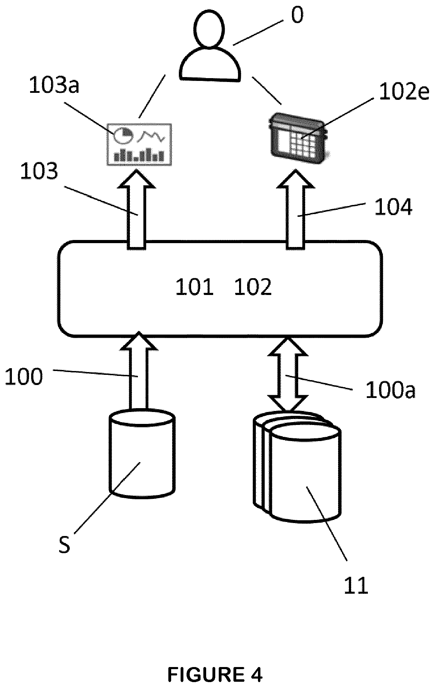

- la figure 4 représente schématiquement un logigramme résumé du procédé.

### DESCRIPTION DES MODES DE RÉALISATION PRÉFÉRÉS DE L'INVENTION

L'invention est décrite ci-après en référence aux figures énumérées ci-dessus.

L'invention concerne un procédé et un système d'aide à la maintenance et à l'optimisation d'un supercalculateur (1).

Le procédé et le système s'appuient sur un ensemble de capteurs (C1, C2, ..., Cn) physiques présents, par exemple, sur les cartes réseaux de chaque noeud (N1, N2, ..., Nn) d'un supercalculateur (1). Ces capteurs (C1, C2, ..., Cn) peuvent générer des signaux (S) représentatifs de plusieurs données statistiques.

Les données statistiques peuvent être, par exemple, le nombre de paquets émis par un noeud (N1, N2, ..., Nn) de calcul, le nombre de paquets reçus par un noeud (N1, N2, ..., Nn) de calcul ou le nombre de paquets perdus par un noeud (N1, N2, ..., Nn) de calcul. Les données statistiques peuvent être aussi des codes d'erreurs rencontrées dans un noeud (N1, N2, ..., Nn) de calcul ou des indicateurs de congestion d'un noeud (N1, N2, ..., Nn) de calcul.

Le procédé et le système s'appuient également sur des bases de données spécifiques déjà présentes dans un supercalculateur (1). Cette base de données peut contenir de manière statistique des informations concernant le supercalculateur (1). Par exemple, cette base de données contient des informations physiques et logiques de chaque noeud (N1, N2, ..., Nn) et de leurs liaisons entre eux. La base de données et les informations sont mémorisées, par exemple, dans une zone de stockage du supercalculateur.

Le système d'aide à la maintenance et à l'optimisation d'un supercalculateur (1) comprend une infrastructure (2) informatique virtuelle ou réelle hébergeant la logique métier du système.

La structure informatique comprend au moins un processeur (4) et des moyens (3) de stockage.

Les moyens (3) de stockage stockent au moins un algorithme (10) de prédiction pour prédire, à intervalles réguliers des variations futures des données statistiques à partir de signaux représentatifs de données statistiques envoyés par le ou les capteurs (C1, C2, ..., Cn) et stockés dans les moyens (3) de stockage.

Les moyens (3) de stockages comprennent également un algorithme (9) de détection pour détecter en temps réel des anomalies de variations des signaux représentatifs des données statistiques envoyés par le ou les capteurs (C1, C2, ..., Cn) par rapport aux variations prédites par l'algorithme (10) de prédiction.

Selon un mode de réalisation, l'algorithme (9) de détection peut comparer des signaux représentatifs des données statistiques avec les variations futures et des intervalles de confiance mémorisés en dernier dans les moyens (3) de stockage. De façon non limitative, l'intervalle de confiance peut être fixé à 5%.

L'infrastructure (2) informatique peut comprendre en outre un algorithme (10a) de modélisation stocké dans les moyens (3) de stockage. L'algorithme (10a) de modélisation permet de construire un modèle mathématique prédictif à partir des données statistique mémorisées dans les moyens (3) de stockage.

Selon une mode de réalisation, l'algorithme (10a) de modélisation construit un modèle qui permet de déterminer chaque valeur d'une série temporelle en fonction des valeurs qui la précède. Par exemple, le modèle est un modèle mixte intégré autorégressif et de moyennes mobiles ou appelé ARIMA (*Auto-regressive Integrated Moving Average* en anglais). Le modèle est alors mémorisé dans les moyens de stockage.

L'infrastructure (2) informatique peut comprend en outre un algorithme (10b) de calcul stocké dans les moyens (3) de stockage. L'algorithme (10b) de calcul permet de calculer, à partir du modèle mathématique prédictif construit par l'algorithme (10a) de modélisation, des variations futures des données statistiques ainsi que des intervalles de confiance délimitant les variations futures des données statistiques.

L'infrastructure (2) informatique peut comprend en outre au moins un algorithme (7) d'agrégation stocké dans les moyens (3) de stockage qui permet d'agréger chaque minute des données statistiques mémorisées dans les moyens (3) de stockage. L'algorithme (7) d'agrégation permet aussi d'agréger chaque minute des signaux représentatifs des données statistiques envoyés en temps réel par le ou les capteurs (C1, C2, ..., Cn).

L'algorithme (7) d'agrégation est par exemple une fonction qui détermine la moyenne ou la médiane d'un ensemble de valeurs. D'autres fonctions d'agrégation adaptées aux données statistique à étudier peuvent être utilisées.

Ainsi, l'algorithme (7) d'agrégation peut agréger chaque minute des données statistiques en déterminant chaque minute la moyenne ou la médiane des données statistiques mémorisées dans les moyens (3) de stockage. L'algorithme (7) d'agrégation peut permettre aussi d'agréger chaque minute des signaux représentatifs des données statistiques en temps réel en déterminant chaque minute la moyenne ou la médiane des signaux représentatifs des données statistiques envoyés en temps réel par le ou les capteurs (C1, C2, ..., Cn).

L'infrastructure (2) informatique comprend en outre un algorithme (6) de filtrage stocké dans les moyens (3) de stockage qui permet de filtrer les données statistiques stockées les moyens (3) de stockage et les signaux représentatifs des données statistiques en fonction du ou des capteurs (C1, C2, ..., Cn) ayant envoyés les signaux représentatifs de ces données statistiques.

Le système comprend en outre des moyens (5) d'affichage qui permettent d'affichage des valeurs des variations futures ainsi que les intervalles de confiance. Des signaux représentatifs des valeurs des variations futures et des intervalles de confiances sont envoyés par le processeur (4) de l'infrastructure (2) informatique pour que les moyens (5) d'affichage affichent ces valeurs.

Le processeur (4) peut également envoyer des signaux représentatifs d'anomalies, sous la forme, par exemple, d'un tableau (102^{e}) d'anomalies.

Le processeur (4) peut également envoyer des signaux représentatifs des données statistiques en temps réel aux moyens (5) d'affichage pour que ces moyens (5) d'affichage affichent ces valeurs de données statistiques.

Le procédé mis en oeuvre par le système d'aide à la maintenance et à l'optimisation d'un supercalculateur (1) comprend au moins une étape (100) d'envoi au processeur du système d'aide à la maintenance par au moins un capteur (C1, C2, ..., Cn) d'un signal représentatif de données statistiques d'au moins un noeud (N1, N2, ..., Nn) de calcul du supercalculateur (1). De façon non limitative, les données statistiques envoyées peuvent être envoyées à une vitesse de 150 Go/h.

Selon un mode de réalisation, l'étape (100) d'envoi peut comprendre une étape (100a) d'envoi par les bases de données du supercalculateur des informations concernant le supercalculateur au processeur du système d'aide à la maintenance et/ou une étape (100a) de consultation des bases de données du supercalculateur par le processeur du système d'aide à la maintenance pour récupérer des informations concernant le supercalculateur.

Le procédé comprend en outre une étape (102) prédiction à intervalles réguliers des variations futures des données statistiques à partir des signaux représentatifs des données statistiques envoyés par le ou les capteurs (C1, C2, ..., Cn) et stockés dans les moyens (3) de stockage du système d'aide à la maintenance. L'étape (102) de prédiction est mise en oeuvre par l'algorithme (10) de prédiction géré par un processeur (4) du système d'aide à la maintenance.

Selon un mode de réalisation, l'étape (102) de prédiction est mise en oeuvre à intervalles réguliers de soixante minutes.

Le procédé comprend en outre une étape (101) de détection en temps réel, d'anomalies de variations des signaux représentatifs des données statistiques envoyés par le ou les capteurs (C1, C2, ..., Cn) par rapport aux variations futures prédites dans l'étape de prédiction. L'étape de prédiction est mise en oeuvre par l'algorithme (9) de détection géré par le processeur (4).

Selon un mode de réalisation, l'étape de détection peut comprendre en outre une étape de corrélation des signaux, représentatifs des données statistiques, envoyés par le ou les capteurs et/ou consultés par le processeur, avec les informations mémorisées dans la zone de stockage du supercalculateur.

L'étape (102) de prédiction peut comprendre une étape (102a) de mémorisation dans les moyens (3) de stockage des données statistiques envoyés par le ou les capteurs (C1, C2, ..., Cn). Les données statistiques sont envoyées par le ou les capteurs (C1, C2, ..., Cn) sous forme de signaux représentatifs de ces données statistiques.

L'étape (102) de prédiction peut comprendre en outre une étape (102b) de construction, par l'algorithme de modélisation géré par le processeur (4), d'un modèle mathématique prédictif à partir des données statistiques stockées dans les moyens (3) de stockage.

Selon un mode de réalisation, la construction (102b) du modèle mathématique prédictif est calculée par l'algorithme (10a) de modélisation à partir des données statistiques provenant des signaux représentatifs de ces données statistiques envoyés par le ou les capteurs (C1, C2, ..., Cn) depuis les dernières deux heures.

L'étape (102) de prédiction peut comprend en outre une étape (102c) de calcul, par l'algorithme de calcul géré par le processeur (4), des variations futures des données statistiques à partir du modèle mathématique prédictif ainsi que des intervalles de confiance délimitant les variations futures des données statistiques.

L'étape (102) de prédiction peut comprendre en outre une étape (102d) de mémorisation dans les moyens (3) de stockage des variations futures et des intervalles de confiance calculée dans l'étape de calcul.

L'étape (101) de détection peut comprendre une étape (101a) de comparaison, par l'algorithme (9) de détection géré par le processeur (4), des signaux représentatifs des données statistiques avec les variations futures et des intervalles de confiance mémorisés en dernier dans les moyens (3) de stockage.

L'étape (101) de détection peut comprendre en outre une étape (101b) de mémorisation, dans les moyens (3) de stockage, dans un tableau (102e) d'anomalies des anomalies détectées par l'algorithme (9) de détection. Une anomalie est détectée lorsque les signaux représentatifs des données statistiques sortent des intervalles de confiance et/ou s'éloignent des variations futures.

Afin d'augmenter la performance de l'étape (102b) de construction du modèle mathématique prédictif et de limiter les variations, par exemple sinusoïdales, des signaux envoyés par les capteurs (C1, C2, ..., Cn), l'étape (102) de prédiction comprend, en outre, une première étape (106a) d'agrégation, pendant un intervalle de temps déterminé, par un algorithme (7) d'agrégation géré par le processeur (4), des données statistiques mémorisées dans les moyens (3) de stockage. De même, l'étape de détection comprend en outre une deuxième étape (105a) d'agrégation par le processeur (4), pendant le même intervalle de temps, des signaux représentatifs des données statistiques envoyés en temps réel par le ou les capteurs (C1, C2, ..., Cn).

De façon non limitative, l'intervalle de temps est égal à 1 min.

La deuxième étape (105a) d'agrégation permet de pouvoir comparer les valeurs réelles provenant des signaux représentatifs des données statistiques envoyés en temps réel avec les valeurs prédictives agrégées pendant l'étape de prédiction à la première étape (106a) d'agrégation.

Le procédé comprend des étapes (105b, 106b) de filtrage. Ces étapes (105b, 106b) de filtrage permettent de ne garder que les signaux nécessaires à la prédiction et/ou la détection d'anomalies qui sont envoyés par le ou les capteurs (C1, C2, ..., Cn). Par exemple, pour un capteur, l'étape de filtrage permet de filtrer les différents signaux envoyés par le capteur (C1, C2, ..., Cn) selon la ou les données représentées par le ou les signaux nécessaires à la prédiction et/ou la détection. Par un autre exemple, pour plusieurs capteurs (C1, C2, ..., Cn), l'étape de filtrage permet de filtrer les capteurs (C1, C2, ..., Cn) pour ne garder que les capteurs (C1, C2, ..., Cn) qui envoient des signaux nécessaires à la prédiction et/ou la détection d'anomalies.

L'infrastructure (2) informatique comprend ainsi, une interface (non représentée) qui permet de sélectionner pour chaque capteur (C1, C2, ..., Cn), le type de signal nécessaire à la prédiction et/ou la détection d'anomalies et de sélectionner dans l'ensemble des capteurs (C1, C2, ..., Cn), un certain nombre de capteurs (C1, C2, ..., Cn) qui seront utilisés pour le filtrage desdites données ou desdits signaux nécessaires à la prédiction et/ou la détection anomalies.

Ainsi, l'étape (102) de prédiction comprend en outre une première étape (106b) de filtrage, par l'algorithme (6) de filtrage géré par le processeur (4), des données statistiques en fonction du ou des capteurs (C1, C2, ..., Cn) ayant envoyé les signaux représentatifs de ces données statistiques. La première étape (106b) de filtrage précède l'étape (102a) de construction

L'étape (101) de détection comprend une deuxième étape (105b) de filtrage, par l'algorithme (6) de filtrage géré par le processeur (4), des signaux représentatifs des données statistiques en fonction du ou des capteurs (C1, C2, ..., Cn) ayant envoyé ces signaux représentatifs. La deuxième étape (105b) de filtrage précède l'étape (101a) de comparaison.

Dans une première étape (103) d'affichage, les valeurs (103a) des variations futures ainsi que les intervalles de confiance calculés lors de l'étape (102c) de calcul de l'étape (102) de prédiction sont envoyées sous forme de signaux représentatifs de ces valeurs par le processeur (4) aux moyens (5) d'affichage pour être affichés sur les moyens (5) d'affichage.

La première étape (106b) de filtrage précède la première étape (106a) d'agrégation. La deuxième étape (105b) de filtrage précède la deuxième étape (105a) d'agrégation.

L'étape de détection comprend une deuxième étape (104) d'affichage dans laquelle le processeur (4) du système d'aide à la maintenance envoie aux moyens (5) d'affichage au moins un signal représentatif d'une anomalie détectée par l'algorithme (9) de détection lorsque qu'une anomalie a été détectée par l'algorithme (9) de détection.

Le processeur (4) peut envoyer aux moyens (5) d'affichage les signaux représentatifs des anomalies sous la forme d'un tableau d'anomalies. Le tableau d'anomalies envoyé est, par exemple, le tableau (102e) d'anomalies des anomalies détectées mémorisé dans les moyens (3) de stockage pendant l'étape (102) de détection.

Un utilisateur (0) du système d'aide à la maintenance et à l'optimisation pourra alors regarder les moyens d'affichage pour décider des actions à mener pour optimiser le fonctionnement du supercalculateur en fonction des informations affichées sur les moyens d'affichage.

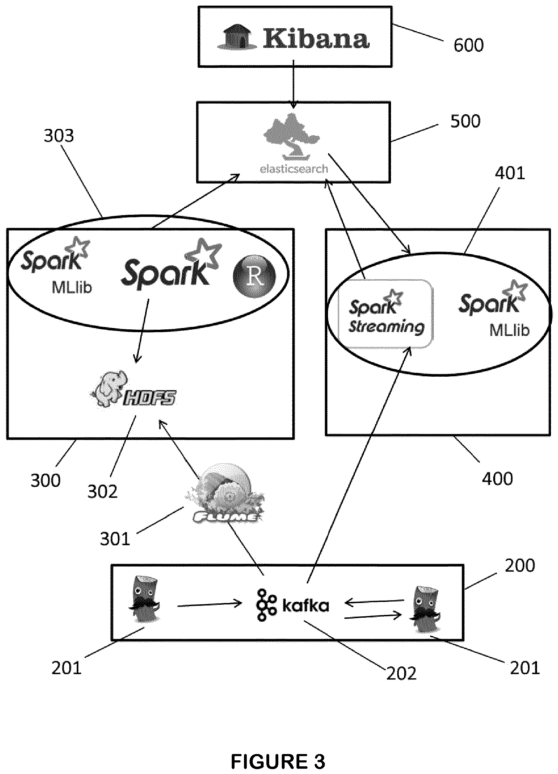

Nous décrivons ci-après une architecture possible du système d'aide à la maintenance et à l'optimisation (figure 3). Il s'agit d'une architecture logicielle divisée en plusieurs couches permettant de faire à la fois l'étape de prédiction et l'étape de détection.

Concernant l'étape d'envoi par le ou les capteurs (C1, C2, ..., Cn) de signaux représentatifs de données statistiques, dans une couche (200) d'ingestion de données, il est utilisé un outil de collecte, analyse et stockage de logs ou fichiers logs tel que, par exemple, « *LogStash* » (201) servant de connecteur depuis différents protocoles d'émission de logs.

Par «log» ou «fichier log» on entend un fichier texte qui liste chronologiquement les évènements exécutés. Le log est un fichier utile pour comprendre la provenance d'une erreur ou une anomalie.

L'outil « *LogStash* » (201) envoie les données vers un outil orienté message tel que « *Kafka* » (202) qui est responsable de la gestion des données. De par sa nature, l'outil « *Kafka* » (202), est un courtier de messages (*message broker* en anglais) qui intègre une file d'attente permettant de passer à l'échelle et d'absorber un grand volume de données.

L'outil « *LogStash* » (201) peut également mettre en oeuvre les étapes de filtrage sur les données en entrée.

Une fois les étapes de collecte et/ou de filtrage de données effectués par l'outil « *LogStash* » (201), lesdites données sont utilisées pour la mise en oeuvre de l'étape de prédiction, dans une couche (300) de traitements lourds nommée « batch ». Un outil de collecte, agrégation et transfert de gros volumes de logs tel que, par exemple, « *Flume* » (301) est alors utilisé. L'outil «*Flume*» (301) est un connecteur entre l'outil de gestion de données «*Kafka*» (202) et un système de fichiers distribué tel que «*HDFS*» (302) dans lequel les données sont sauvegardées. Une fois les données sauvegardées, l'étape de construction et l'étape de calcul sont mises en oeuvre à l'aide d'une plateforme de traitement distribuée telle que, par exemple, « *Spark* » (303).

Par « système distribué », « plateforme distribuée » ou généralement une architecture distribuée, on entend une architecture dont les ressources ne se trouvent pas au même endroit ou sur la même machine, les ressources étant reliées entre elle par des moyens de communication. Par exemple, un cluster de calcul ou un supercalculateur sont des architectures ou systèmes distribuées. En effet, par définition un supercalculateur possède une machine centrale et des postes ou machines secondaires autonomes appelés noeuds, la machine centrale et les noeuds étant reliés par un réseau de communication.

L'outil « *Spark* » (303) utilise le langage R qui comprend un grand nombre d'outils statistiques aidant à l'analyse des données, en l'occurrence la construction du modèle mathématique statistique et le calcul des valeurs et intervalles de confiance prédits.

L'outil « Spark » permet, par exemple, de mettre en oeuvre les étapes (105a, 106a) d'agrégation.

Quant à l'étape de détection, dans une couche (400) de traitement en temps réel, il est également utilisé une plateforme de traitement distribuée, mais effectuant un traitement en temps réel. Une version en temps réel de l'outil «.Spark» (303) tel que, par exemple, « Spark Streaming » (401 ) peut être alors utilisée.

Les résultats, obtenus dans la couche (300) de traitement lourds pour l'étape de prédiction et la couche (400) de traitement en temps réel pour l'étape de détection, sont indexés par un moteur de recherche distribué tel que, par exemple, « elasticsearch » (500).

Pour l'étape d'affichage, une interface web telle que « Kibana » (600), par exemple, peut être utilisée. L'interface « Kibana » (600) s'occupe de la visualisation graphique des résultats en effectuant des requêtes sur le moteur de recherche « elasticsearch » (500).

## Revendications

1. Procédé d'aide à la maintenance et à l'optimisation d'un supercalculateur (1) comprenant une :
- étape d'envoi (100), par au moins un capteur (C1, C2, Cn), d'un signal représentatif de données statistiques d'au moins un noeud (N1, N2, Nn) de calcul du supercalculateur (1) à un système d'aide à la maintenance ;
- étape de prédiction (102) à intervalles réguliers par un algorithme (10) de prédiction géré par un processeur (4) du système d'aide à la maintenance des variations futures des données statistiques à partir des signaux représentatifs des données statistiques envoyés par le ou les capteurs (C1, C2, Cn) et stockés dans des moyens (3) de stockage du système d'aide à la maintenance ;
- étape de détection (101) en temps réel, par un algorithme (9) de détection géré par le processeur (4), d'anomalies de variations des signaux représentatifs des données statistiques envoyés par le ou les capteurs (C1, C2, Cn) par rapport aux variations futures prédites dans l'étape de prédiction (102) ;
le procédé étant caractérisé en que
les étapes de prédiction (102) de variations futures et de détection (101) d'anomalies comprennent au moins un premier et un second filtrage, (106b) et respectivement (105b), desdits signaux représentatifs des données statistiques en fonction du ou desdits capteur(s) ayant envoyé lesdits signaux nécessaires à la mise en oeuvre de la maintenance et l'optimisation dudit supercalculateur (1),
et en ce qu'il comprend une étape de sélection pour chaque capteur (C1, C2, Cn), par une interface de l'infrastructure informatique, d'un type de signal nécessaire à la prédiction et/ou la détection d'anomalies, et de sélection, dans l'ensemble des capteurs (C1 , C2, Cn), d'un certain nombre de capteurs (C1 , C2, Cn) qui seront utilisés pour le filtrage desdites données ou desdits signaux nécessaires à la prédiction et/ou la détection des anomalies.

2. Procédé selon la revendication 1, **caractérisé en ce que** l'étape (102) de prédiction comprend les étapes suivantes :
- mémorisation (102a) dans les moyens (3) de stockage des données statistiques envoyés par le ou les capteurs (C1, C2, Cn) sous forme de signaux représentatifs de ces données statistiques ;
- construction (102b), par un algorithme (10a) de modélisation géré par le processeur (4), d'un modèle mathématique prédictif à partir des données statistiques, le modèle étant mémorisé dans les moyens (3) de stockage ;
- calcul (102c), par un algorithme (10b) de calcul géré par le processeur (4), des variations futures des données statistiques à partir du modèle mathématique prédictif ainsi que des intervalles de confiance délimitant les variations futures des données statistiques ;
- mémorisation (102d) dans les moyens (3) de stockage des variations futures et des intervalles de confiance.

3. Procédé selon les revendications 1 et 2, **caractérisé en ce que** la construction (102b) du modèle mathématique prédictif est calculée par l'algorithme (10a) de modélisation géré par le processeur (4) à partir des données statistiques provenant des signaux représentatifs de ces données statistiques envoyés par le ou les capteurs (C1, C2, Cn) depuis les dernières deux heures.

4. Procédé selon les revendications 1 et 2, **caractérisé en ce que** l'étape (102) de prédiction est mise en oeuvre à intervalles réguliers de soixante minutes.

5. Procédé selon une des revendications 1 à 4, **caractérisé en ce que** l'étape (101) de détection comprend les étapes suivantes :
- comparaison (101 a), par l'algorithme (9) de détection géré par le processeur (4), des signaux représentatifs des données statistiques avec les variations futures et des intervalles de confiance mémorisés en dernier dans les moyens (3) de stockage ;
- mémorisation (101 b), dans les moyens (3) de stockage, dans un tableau d'anomalies des anomalies détectées par l'algorithme (9) de détection, une anomalie étant détectée lorsque les signaux représentatifs des données statistiques sortent des intervalles de confiance et/ou s'éloignent des variations futures.

6. Procédé selon les revendications 1 à 5, **caractérisé en ce que** l'étape (102) de prédiction comprend, en outre, une première étape (106a) d'agrégation, pendant un intervalle de temps déterminé, par un algorithme (7) d'agrégation géré par le processeur (4), des données statistiques mémorisées dans les moyens (3) de stockage, l'étape de détection comprenant en outre une deuxième étape (105a) d'agrégation par le processeur (4), pendant le même intervalle de temps, des signaux, représentatifs des données statistiques, envoyés en temps réel par le ou les capteurs (C1 , C2, Cn).

7. Procédé selon les revendications 2 à 5, **caractérisé en ce que** le premier filtrage (106b), par un algorithme (6) de filtrage géré par ledit processeur (4), des données statistiques en fonction dudit ou desdits capteur(s) (C1 , C2, Cn) ayant envoyé lesdits signaux représentatifs de ces données statistiques au cours de l'étape (102) de prédiction, précède l'étape (102a) de construction, le second filtrage (105b) dans l'étape de détection, par l'algorithme (6) de filtrage géré par le processeur (4), des signaux représentatifs des données statistiques en fonction dudit ou desdits capteur(s) (C1 , C2, Cn) ayant envoyé ces signaux représentatifs, précède l'étape (101a) de comparaison.

8. Procédé selon les revendications 1 à 7, **caractérisé en ce que** l'étape (102) de prédiction comprend une première étape (103) d'affichage dans laquelle le processeur (4) du système d'aide à la maintenance envoie des signaux représentatifs des valeurs des variations futures ainsi que les intervalles de confiance vers des moyens (5) d'affichage pour être affichés par les moyens (5) d'affichage.

9. Procédé selon les revendications 1 à8, **caractérisé en ce que** l'étape de détection (101) comprend une deuxième étape (104) d'affichage dans laquelle le processeur (4) du système d'aide à la maintenance envoie aux moyens (5) d'affichage un signal représentatif d'une anomalie détectée par l'algorithme (9) de détection lorsque qu'une anomalie a été détectée par l'algorithme (9) de détection.

10. Procédé selon les revendications 1 à 9, **caractérisé en ce que** l'étape de prédiction est réalisée en outre à partir d'informations concernant le supercalculateur (1), les données, mémorisées dans une zone de stockage du supercalculateur (1) et contenant lesdites informations, étant envoyées (100a) au système d'aide à la maintenance.

11. Système d'aide à la maintenance et à l'optimisation d'un supercalculateur (1) comprenant une infrastructure (2) informatique comportant au moins un processeur (4) et des moyens (3) de stockage des signaux représentatifs de données statistiques envoyés par au moins un capteur (C1, C2, Cn) situé à au moins un noeud (N1, N2, Nn) de calcul dudit supercalculateur (1), lesdits moyens (3) de stockage contenant, également, au moins :
- un algorithme (10) de prédiction, dont l'exécution sur ledit processeur (4) permet de prédire, à intervalles réguliers des variations futures des données statistiques à partir des signaux représentatifs de données statistiques en provenance desdits capteurs,
- un algorithme (9) de détection, dont l'exécution sur ledit processeur (4) permet de détecter, en temps réel, des anomalies de variations des signaux représentatifs des données statistiques en provenance desdits capteurs par rapport aux variations prédites par l'algorithme (10) de prédiction,
ledit système étant **caractérisé en ce qu'**il comprend également au moins un algorithme (6) dont l'exécution sur le processeur (4) permet de filtrer lesdits signaux représentatifs des données statistiques en fonction dudit ou desdits capteur(s) (C1, C2, Cn) ayant envoyé lesdits signaux représentatifs de ces données statistiques nécessaires à la mise en oeuvre du procédé selon la revendication 1, et
**en ce que** l'infrastructure (2) informatique comprend une interface qui permet de sélectionner pour chaque capteur (C1, C2, Cn), le type de signal nécessaire à la prédiction et/ou la détection d'anomalies et de sélectionner dans l'ensemble des capteurs (C1 , C2, Cn), un certain nombre de capteurs (C1, C2, Cn) qui sont utilisés pour le filtrage desdites données ou desdits signaux nécessaires à la prédiction et/ou la détection anomalies.

12. Système selon la revendication 12, **caractérisé en ce que** l'infrastructure (2) informatique comprend en outre :
- un algorithme (10a) de modélisation stocké dans les moyens (3) de stockage apte à construire un modèle mathématique prédictif à partir des données statistique mémorisées dans les moyens (3) de stockage,
- un algorithme (10b) de calcul stocké dans les moyens (3) de stockage apte à calculer des variations futures des données statistiques à partir du modèle mathématique prédictif ainsi que des intervalles de confiance délimitant les variations futures des données statistiques.

13. Système selon au moins une des revendications 11 et 12, **caractérisé en ce que** l'algorithme (9) de détection est apte à comparer des signaux représentatifs des données statistiques avec les variations futures et des intervalles de confiance mémorisés en dernier dans les moyens (3) de stockage.

14. Système selon au moins une des revendications 11 à 13, **caractérisé en ce que** l'infrastructure (2) informatique comprend au moins un algorithme (7) d'agrégation stocké dans les moyens (3) de stockage apte à agréger chaque minute des données statistiques mémorisées dans les moyens (3) de stockages et à agréger chaque minute des signaux, représentatifs des données statistiques, envoyés en temps réel par le ou les capteurs (C1, C2, Cn).

15. Système selon au moins une des revendications 11 à 14, **caractérisé en ce que** l'infrastructure (2) informatique comprend en outre un algorithme (6) de filtrage stocké dans les moyens (3) de stockage apte à filtrer les données statistiques stockées les moyens de stockage et les signaux, représentatifs des données statistiques, en fonction du ou des capteurs (C1, C2, Cn) ayant envoyés les signaux représentatifs de ces données statistiques.

16. Système selon au moins une des revendications 11 à 15, **caractérisé en ce que** le système comprend en outre des moyens (5) d'affichage aptes à afficher au moins les valeurs des variations futures ainsi que les intervalles de confiance.

## Patentansprüche

1. Verfahren zum Unterstützen der Wartung und Optimierung eines Supercomputers (1) umfassend einen:
- Schritt eines Sendens (100) eines Signals, das statistische Daten von mindestens einem Rechenknoten (N1, N2, Nn) des Supercomputers (1) darstellt, durch mindestens einen Sensor (C1, C2, Cn) an ein Wartungsunterstützungssystem;
- Schritt eines Vorhersagens (102) in regelmäßigen Intervallen durch einen Vorhersagealgorithmus (10), der durch einen Prozessor (4) des Wartungsunterstützungssystems gesteuert wird, von zukünftigen Variationen der statistischen Daten aus Signalen, die die statistischen Daten darstellen, die durch den Sensor oder die Sensoren (C1, C2, Cn) gesendet und in Mitteln zum Ablegen (3) des Wartungsunterstützungssystems abgelegt werden;
- Schritt eines Erfassens (101) in Echtzeit, durch einen durch den Prozessor (4) gesteuerten Erfassungsalgorithmus (9), von Anomalien der Variationen der Signale, die die statistischen Daten darstellen, die durch den Sensor oder die Sensoren (C1, C2, Cn) gesendet werden, im Verhältnis zu den zukünftigen Variationen, die in dem Schritt des Vorhersagens (102) vorhergesagt werden;
wobei das Verfahren **dadurch gekennzeichnet ist, dass** die Schritte des Vorhersagens (102) zukünftiger Variationen und des Erfassens (101) von Anomalien mindestens eine erste und eine zweite Filterung (106b) beziehungsweise (105b) der Signale, die die statistischen Daten darstellen, in Abhängigkeit von dem Sensor oder den Sensoren umfassen, der/die die Signale gesendet hat/haben, die für die Durchführung der Wartung und Optimierung des Supercomputers (1) erforderlich sind,
und dadurch, dass es einen Schritt eines Auswählens für jeden Sensor (C1, C2, Cn) durch eine Schnittstelle der IT-Infrastruktur eines Signaltyps, der für die Vorhersage und/oder Erfassung von Anomalien erforderlich ist, und des Auswählens, aus der Gesamtheit der Sensoren (C1, C2, Cn), einer bestimmten Anzahl von Sensoren (C1, C2, Cn) umfasst, die für die Filterung der Daten oder der Signale verwendet werden, die für die Vorhersage und/oder Erfassung von Anomalien erforderlich sind.

2. Verfahren nach Anspruch 1, **dadurch gekennzeichnet, dass** der Schritt des Vorhersagens (102) die folgenden Schritte umfasst:
- Speichern (102a) der durch den Sensor oder die Sensoren (C1, C2, Cn) gesendeten statistischen Daten in den Mitteln zum Ablegen (3) in Form von Signalen, die diese statistischen Daten darstellen;
- Erstellen (102b), durch einen durch den Prozessor (4) gesteuerten Modellierungsalgorithmus (10a), eines mathematischen Vorhersagemodells aus den statistischen Daten, wobei das Modell in den Mitteln zum Ablegen (3) gespeichert wird;
- Berechnen (102c), durch einen durch den Prozessor (4) gesteuerten Berechnungsalgorithmus (10b), von zukünftigen Variationen der statistischen Daten aus dem mathematischen Vorhersagemodell sowie von Konfidenzintervallen, die die zukünftigen Variationen der statistischen Daten eingrenzen;
- Speichern (102d) der zukünftigen Variationen und der Konfidenzintervalle in den Mitteln zum Ablegen (3).

3. Verfahren nach Anspruch 1 und 2, **dadurch gekennzeichnet, dass** die Erstellung (102b) des mathematischen Vorhersagemodells durch den durch den Prozessor (4) gesteuerten Modellierungsalgorithmus (10a) aus den statistischen Daten berechnet wird, die aus den Signalen stammen, die diese statistischen Daten darstellen, die durch den Sensor oder die Sensoren (C1, C2, Cn) seit den letzten zwei Stunden gesendet wurden.

4. Verfahren nach Anspruch 1 und 2, **dadurch gekennzeichnet, dass** der Schritt des Vorhersagens (102) in regelmäßigen Intervallen von sechzig Minuten durchgeführt wird.

5. Verfahren nach den Ansprüchen 1 bis 4, **dadurch gekennzeichnet, dass** der Schritt des Erfassens (101) die folgenden Schritte umfasst:
- Vergleichen (101a) durch den durch den Prozessor (4) gesteuerten Erfassungsalgorithmus (9), der Signale, die die statistischen Daten darstellen, mit den zukünftigen Variationen und den zuletzt in den Mitteln zum Ablegen (3) gespeicherten Konfidenzintervallen;
- Speichern (101 b) der durch den Erfassungsalgorithmus (9) erfassten Anomalien in den Mitteln zum Ablegen (3) in einer Anomalietabelle, wobei eine Anomalie erfasst wird, wenn die Signale, die die statistischen Daten darstellen, die Konfidenzintervalle verlassen und/oder von den zukünftigen Variationen abweichen.

6. Verfahren nach den Ansprüchen 1 bis 5, **dadurch gekennzeichnet, dass** der Schritt des Vorhersagens (102) ferner einen ersten Schritt eines Aggregierens (106a) während eines bestimmten Zeitintervalls durch einen durch den Prozessor (4) gesteuerten Aggregationsalgorithmus (7) der in den Mitteln zum Ablegen (3) gespeicherten statistischen Daten umfasst, wobei der Schritt des Erfassens ferner einen zweiten Schritt (105a) des Aggregierens, durch den Prozessor (4) während desselben Zeitintervalls, der Signale umfasst, die die statistischen Daten darstellen, die in Echtzeit durch den Sensor oder die Sensoren (C1, C2, Cn) gesendet werden.

7. Verfahren nach Anspruch 2 bis 5, **dadurch gekennzeichnet, dass** die erste Filterung (106b) der statistischen Daten durch einen durch den Prozessor (4) gesteuerten Filterungsalgorithmus (6) in Abhängigkeit von dem Sensor oder den Sensoren (C1, C2, Cn), der/die die Signale, die diese statistischen Daten darstellen, im Verlauf des Schritts des Vorhersagens (102) gesendet hat/haben, vor dem Schritt des Erstellens (102a) erfolgt, wobei die zweite Filterung (105b) in dem Schritt des Erfassens durch den durch den Prozessor (4) gesteuerten Filterungsalgorithmus (6), der Signale umfasst, die die statistischen Daten darstellen, in Abhängigkeit von dem Sensor oder den Sensoren (C1, C2, Cn), der/die diese Signale gesendet hat/haben, die die statistischen Daten darstellen, vor dem Schritt des Vergleichs (101a) erfolgt.

8. Verfahren nach Anspruch 1 bis 7, **dadurch gekennzeichnet, dass** der Schritt des Vorhersagens (102) einen ersten Schritt eines Anzeigens (103) umfasst, in dem der Prozessor (4) des Wartungsunterstützungssystems Signale, die die Werte der zukünftigen Variationen darstellen, sowie die Konfidenzintervalle an Mittel zum Anzeigen (5) sendet, um durch die Mittel zum Anzeigen (5) angezeigt zu werden.

9. Verfahren nach Anspruch 1 bis 8, **dadurch gekennzeichnet, dass** der Schritt des Erfassens (101) einen zweiten Schritt des Anzeigens (104) umfasst, in dem der Prozessor (4) des Wartungsunterstützungssystems ein Signal, das eine durch den Erfassungsalgorithmus (9) erfasste Anomalie darstellt, an die Mittel zum Anzeigen (5) sendet, wenn eine Anomalie durch den Erfassungsalgorithmus (9) erfasst wurde.

10. Verfahren nach Anspruch 1 bis 9, **dadurch gekennzeichnet, dass** der Schritt des Vorhersagens ferner aus Informationen über den Supercomputer (1) vorgenommen wird, wobei die Daten, die in einem Ablagebereich des Supercomputers (1) gespeichert sind und die Informationen einschließen, an das Wartungsunterstützungssystem gesendet werden (100a).

11. System zum Unterstützen der Wartung und Optimierung eines Supercomputers (1), das eine IT-Infrastruktur (2) umfasst, die mindestens einen Prozessor (4) und Mittel zum Ablegen (3) von Signalen aufweist, die statistische Daten darstellen, die durch mindestens einen Sensor (C1, C2, Cn) gesendet werden, der sich an mindestens einem Rechenknoten (N1, N2, Nn) des Supercomputers (1) befindet, wobei die Mittel zum Ablegen (3) auch mindestens einschließen:
- einen Vorhersagealgorithmus (10), dessen Ausführung auf dem Prozessor (4) es ermöglicht, in regelmäßigen Intervallen zukünftige Variationen der statistischen Daten aus Signalen vorherzusagen, die die statistischen Daten darstellen, die aus den Sensoren stammen,
- einen Erfassungsalgorithmus (9), dessen Ausführung auf dem Prozessor (4) es ermöglicht, in Echtzeit Anomalien in den Variationen der Signale, die die statistischen Daten darstellen, die aus den Sensoren stammen, im Verhältnis zu den Variationen zu erfassen, die durch den Vorhersagealgorithmus (10) vorhergesagt werden,
wobei das System **dadurch gekennzeichnet ist, dass** es auch mindestens einen Algorithmus (6) umfasst, dessen Ausführung auf dem Prozessor (4) es ermöglicht, die Signale, die die statistischen Daten darstellen, in Abhängigkeit von dem Sensor oder den Sensoren (C1, C2, Cn) zu filtern, der/die die Signale gesendet hat/ haben, die diese statistischen Daten darstellen, die für die Durchführung des Verfahrens nach Anspruch 1 erforderlich sind, und
dass die IT-Infrastruktur (2) eine Schnittstelle umfasst, die es ermöglicht, für jeden Sensor (C1, C2, Cn) den Signaltyp auszuwählen, der für die Vorhersage und/oder Erfassung von Anomalien erforderlich ist, und aus der Gesamtheit der Sensoren (C1, C2, Cn) eine bestimmte Anzahl von Sensoren (C1, C2, Cn) auszuwählen, die für die Filterung der Daten oder Signale verwendet werden, die für die Vorhersage und/oder Erfassung von Anomalien erforderlich sind.

12. System nach Anspruch 12, **dadurch gekennzeichnet, dass** die IT-Infrastruktur (2) ferner umfasst:
- einen in den Mitteln zum Ablegen (3) abgelegten Modellierungsalgorithmus (10a), der geeignet ist, ein mathematisches Vorhersagemodell aus den in den Mitteln zum Ablegen (3) gespeicherten statistischen Daten zu erstellen,
- einen in den Mitteln zum Ablegen (3) abgelegten Berechnungsalgorithmus (10b), der geeignet ist, zukünftige Variationen der statistischen Daten aus dem mathematischen Vorhersagemodell sowie Konfidenzintervalle zu berechnen, die die zukünftigen Variationen der statistischen Daten eingrenzen.

13. System nach mindestens einem der Ansprüche 11 und 12,
**dadurch gekennzeichnet, dass** der Erfassungsalgorithmus (9) geeignet ist, Signale, die die statistischen Daten darstellen, mit den zukünftigen Variationen und den zuletzt in den Mitteln zum Ablegen (3) gespeicherten Konfidenzintervallen zu vergleichen.

14. System nach mindestens einem der Ansprüche 11 bis 13,
**dadurch gekennzeichnet, dass** die IT-Infrastruktur (2) mindestens einen in den Mitteln zum Ablegen (3) abgelegten Aggregationsalgorithmus (7) umfasst, der geeignet ist, jede Minute der in den Mitteln zum Ablegen (3) gespeicherten statistischen Daten zu aggregieren und jede Minute der Signale zu aggregieren, die die statistischen Daten darstellen, die in Echtzeit durch den Sensor oder die Sensoren (C1, C2, Cn) gesendet werden.

15. System nach mindestens einem der Ansprüche 11 bis 14,
**dadurch gekennzeichnet, dass** die IT-Infrastruktur (2) ferner einen in den Mitteln zum Ablegen (3) abgelegten Filterungsalgorithmus (6) umfasst, der geeignet ist, die abgelegten statistischen Daten, die Mittel zum Ablegen und die Signale, die die statistischen Daten darstellen, in Abhängigkeit von dem Sensor oder den Sensoren (C1, C2, Cn) zu filtern, der/die die Signale gesendet hat/haben, die diese statistischen Daten darstellen.

16. System nach mindestens einem der Ansprüche 11 bis 15,
**dadurch gekennzeichnet, dass** das System ferner Mittel zum Anzeigen (5) umfasst, die geeignet sind, mindestens die Werte der zukünftigen Variationen sowie die Konfidenzintervalle anzuzeigen.

## Claims

1. A method for assisting in the maintenance and optimization of a supercomputer (1), comprising:
- a step of sending (100), by at least one sensor (C1, C2, Cn), a signal representative of statistical data of at least one calculation node (N1, N2, Nn) of the supercomputer (1) to a maintenance assistance system;
- a step of predicting (102), at regular intervals, by a prediction algorithm (10) managed by a processor (4) of the maintenance assistance system, future variations of the statistical data from the signals representative of the statistical data that are sent by the sensor(s) (C1, C2, Cn) and stored in storage means (3) of the maintenance assistance system;
- a step of detecting (101) in real time, by a detection algorithm (9) managed by the processor (4), anomalies of variations in the signals representative of the statistical data that are sent by the sensor(s) (C1, C2, Cn) relative to the future variations predicted in the prediction step (102);
the method being **characterized in that** the steps of predicting (102) future variations and detecting (101) anomalies comprise at least a first and a second filtering, (106b) and (105b) respectively, of said signals representative of the statistical data on the basis of said sensor(s) having sent said signals that are necessary for the implementation of the maintenance and the optimization of said supercomputer (1),
and **in that** it comprises a step of selecting, for each sensor (C1, C2, Cn), by an interface of the computing infrastructure, a type of signal necessary for the prediction and/or detection of anomalies, and selecting, in the set of sensors (C1, C2, Cn), a particular number of sensors (C1, C2, Cn) which will be used for filtering said data or said signals necessary for the prediction and/or detection of anomalies.

2. The method according to claim 1, **characterized in that** the prediction step (102) comprises the following steps:
- memorising (102a), in the storage means (3), the statistical data sent by the sensor(s) (C1, C2, Cn) in the form of signals representative of these statistical data;
- constructing (102b), by a modeling algorithm (10a) managed by the processor (4), a predictive mathematical model from the statistical data, the model being memorised in the storage means (3);
- calculating (102c), by a calculation algorithm (10b) managed by the processor (4), future variations of the statistical data from the predictive mathematical model as well as confidence intervals delimiting the future variations of the statistical data;
- memorising (102d), in the storage means (3), the future variations and confidence intervals.

3. The method according to claims 1 and 2, **characterized in that** the construction (102b) of the predictive mathematical model is calculated, by the modeling algorithm (10a) managed by the processor (4), from the statistical data originating from the signals representative of these statistical data that are sent by the sensor(s) (C1, C2, Cn) in the last two hours.

4. The method according to claims 1 and 2, **characterized in that** the prediction step (102) is carried out at regular intervals of sixty minutes.

5. The method according to any of claims 1 to 4, **characterized in that** the detection step (101) comprises the following steps:
- comparing (101a), by the detection algorithm (9) managed by the processor (4), the signals representative of the statistical data with the future variations and the confidence intervals last memorised in the storage means (3);
- memorising (101b), in the storage means (3), in an anomaly table, the anomalies detected by the detection algorithm (9), an anomaly being detected when the signals representative of the statistical data are outside of the confidence intervals and/or depart from the future variations.

6. The method according to claims 1 to 5, **characterized in that** the prediction step (102) further comprises a first step of aggregating (106a), for a determined time interval, by an aggregation algorithm (7) managed by the processor (4), the statistical data memorised in the storage means (3), the detection step also comprising a second step of aggregating (105a), by the processor (4), for the same time interval, the signals representative of the statistical data that are sent in real time by the sensor(s) (C1, C2, Cn).

7. The method according to claims 2 to 5, **characterized in that** the first filtering (106b), by a filtering algorithm (6) managed by said processor (4), of the statistical data on the basis of said sensor(s) (C1, C2, Cn) having sent said signals representative of these statistical data during the prediction step (102), precedes the construction step (102a), and the second filtering (105b) in the detection step, by the filtering algorithm (6) managed by the processor (4), of the signals representative of the statistical data on the basis of said sensor(s) (C1, C2, Cn) having sent these representative signals, precedes the comparison step (101a).

8. The method according to claims 1 to 7, **characterized in that** the prediction step (102) comprises a first display step (103) in which the processor (4) of the maintenance assistance system sends the signals representative of the values of the future variations as well as the confidence intervals to display means (5) to be displayed by the display means (5).

9. The method according to claims 1 to 8, **characterized in that** the detection step (101) comprises a second display step (104) in which the processor (4) of the maintenance assistance system sends a signal representative of an anomaly detected by the detection algorithm (9) to the display means (5) when an anomaly has been detected by the detection algorithm (9).

10. The method according to claims 1 to 9, **characterized in that** the prediction step is carried out also on the basis of information regarding the supercomputer (1), the data which is memorised in a storage region of the supercomputer (1) and contains said information being sent (100a) to the maintenance assistance system.

11. A system for assisting in the maintenance and optimization of a supercomputer (1), comprising a computing infrastructure (2) comprising at least one processor (4) and means (3) for storing signals representative of statistical data sent by at least one sensor (C1, C2, Cn) located at at least one calculation node (N1, N2, Nn) of said supercomputer (1), said storage means (3) also containing at least:
- a prediction algorithm (10), the execution of which on said processor (4) makes it possible to predict, at regular intervals, future variations of the statistical data from the signals representative of statistical data that originate from said sensors,
- a detection algorithm (9), the execution of which on said processor (4) makes it possible to detect, in real time, anomalies of variations in the signals representative of the statistical data originating from said sensors relative to the variations predicted by the prediction algorithm (10),
said system being **characterized in that** it also comprises at least one algorithm (6), the execution of which on the processor (4) makes it possible to filter said signals representative of the statistical data on the basis of said sensor(s) (C1, C2, Cn) having sent said signals representative of these statistical data necessary for the implementation of the method according to claim 1, and
**in that** the computing infrastructure (2) comprises an interface which makes it possible to select, for each sensor (C1, C2, Cn), the type of signal necessary for the prediction and/or detection of anomalies and to select, in the set of sensors (C1, C2, Cn), a particular number of sensors (C1, C2, Cn) which are used for the filtering of said data or said signals necessary for the prediction and/or detection of anomalies.

12. The system according to claim 12, **characterized in that** the computing infrastructure (2) also comprises:
- a modeling algorithm (10a) that is stored in the storage means (3) and is capable of constructing a predictive mathematical model from the statistical data memorised in the storage means (3),
- a calculation algorithm (10b) that is stored in the storage means (3) and is capable of calculating future variations of the statistical data from the predictive mathematical model as well as confidence intervals delimiting the future variations of the statistical data.

13. The system according to at least one of claims 11 and 12,
**characterized in that** the detection algorithm (9) is capable of comparing the signals representative of the statistical data with the future variations and the confidence intervals last memorised in the storage means (3).

14. The system according to at least one of claims 11 to 13,
**characterized in that** the computing infrastructure (2) comprises at least one aggregation algorithm (7) that is stored in the storage means (3) and is capable of aggregating each minute of the statistical data memorised in the storage means (3) and of aggregating each minute of the signals representative of the statistical data that are sent in real time by the sensor(s) (C1, C2, Cn).

15. The system according to at least one of claims 11 to 14,
**characterized in that** the computing infrastructure (2) also comprises a filtering algorithm (6) that is stored in the storage means (3) and is capable of filtering the statistical data stored the storage means and the signals representative of the statistical data on the basis of the sensor(s) (C1, C2, Cn) having sent the signals representative of these statistical data.

16. The system according to at least one of claims 11 to 15,
**characterized in that** the system also comprises display means (5) capable of displaying at least the values of the future variations as well as the confidence intervals.
